Europäisches Patentamt

European Patent Office

Office européen des brevets

(11) Publication number : **0 468 737 A1**

# EUROPEAN PATENT APPLICATION

(21) Application number : **91306676.7**

(51) Int. Cl.⁵ : **F24F 6/14, B05B 12/12**

(22) Date of filing : **23.07.91**

(30) Priority : **24.07.90 DE 4023445**

(43) Date of publication of application :
**29.01.92 Bulletin 92/05**

(84) Designated Contracting States :
**AT BE CH DE DK ES FR GB GR IT LI LU NL SE**

(71) Applicant : **COLT INTERNATIONAL HOLDINGS A.G.**
**Ruessenstrasse 5A**
**CH-6340 Walterswil/Baar (CH)**

(72) Inventor : **Veldhuizen, Henricus Marie Theodorus**
**Reekstraat 32**
**NL-6641 KK Beuningen (NL)**

(74) Representative : **Hughes, Brian Patrick et al**
**Graham Watt & Co. Riverhead**
**Sevenoaks, Kent TN13 2BN (GB)**

(54) **Method and apparatus for humidifying inside air.**

(57)  The invention relates to a method and an apparatus for humidifying the air, particularly of industrial areas, wherein the actual moisture content of the inside air is determined continuously or cyclically by a measuring and control unit 2 and compared with a desired moisture content of the inside air which can be preset (difference between desired value and actual value). If there is a difference between desired value and actual value, a water supply line and a compressed-air supply line 6, 7 of an atomizer nozzle unit 5 can be actuated in the opening sense. In order to be able to avoid dripping of the atomizer nozzle unit effectively with structurally simple means, the pressure of the compressed air to be supplied to the atomizer nozzle unit 5 is controlled depending on the difference between desired value and actual value and the amount of water to be supplied to the atomizer nozzle unit 5 is variable depending on the set air pressure. For this purpose, the apparatus according to the invention has a valve arrangement which is constructed in the form of a pressure reducing valve 10 which is disposed in the compressed-air supply connection line 7 of the atomizer nozzle unit 5. The water supply connection line 6 of the atomizer nozzle unit 5 can be connected to a water tank 11 which is substantially at atmospheric pressure. The outlet of the compressed-air supply line 7, 7.1, 7.2 at the atomizer nozzle side is arranged in front of the outlet at the atomizer nozzle side in the outflow direction.

EP 0 468 737 A1

Fig. 1

This invention relates to a method of humidifying the air, particularly of industrial areas in a construction in accordance with the preamble to patent claim 1. Besides that, the invention has as its subject an apparatus for humidifying the air, particularly of industrial areas, having an atomizer nozzle unit comprising a water supply and a compressed-air supply.

For manufacturing and/or storage reasons, a constant air humidity is often necessary in areas of numerous industrial undertakings. This applies, in particular, in the leather, plastics, paper, wood, textile and tobacco manufacturing or processing industries. Too low an air humidity often leads to losses of production and quality. In the paper industry for example, too low an air humidity may cause static charge and overloading of the paper with dust as a result. In the textile processing industry, too low an air humidity often leads to an irregular passage of material and to thread breakage.

In a known method and in a known apparatus of the above-mentioned kind, the actual moisture content of the inside air has to be determined by means of a hygrometer. Depending on this measurement result and a desired moisture content of the air which can be preset, the supply of air and water from atomizer nozzles can be opened by a measured-value processing device if there is a need for humidification. In this case, the compressed-air and water connection supply lines of the atomizer nozzles each comprise valves which are opened by the measured-value processing device when there is a need for humidification and closed when the desired moisture content of the air is detected. The water and the air are supplied to the respective atomizer nozzles under pressure and mixed with one another in a mixing chamber at the head side in each atomizer nozzle, after which they emerge from the atomizer nozzle in the form of a spray. A disadvantage of this known method and of the known apparatus is the inevitable dripping from the atomizer nozzle outlet when the particular valves of the compressed-air and water connection supply lines are closed. This can cause disadvantageous consequences, particularly if the air humidifying apparatus responds frequently, for example in that the goods to be manufactured or processed in the area are wetted. In addition, the amount of water required is considerable in this case. Whistling and hissing noises also cause problems. Moreover, because of the water still present at the nozzle head even after the closing operation, furring can often not be avoided even by providing special cleaning needle or pin members.

It is the object of the present invention to make available a method and an apparatus of the kind specified wherein dripping from atomizer nozzles can be effectively avoided.

The present invention is a method of humidifying the air, wherein the actual moisture content of the air in the area is determined continuously or cyclically by a measuring and control unit and compared with a desired moisture content of the air in the area, which can be preset, and if there is a difference between desired value and actual value, a water supply line and a compressed air supply line of an atomizer nozzle unit can be actuated in the opening sense, characterised in that the pressure of the compressed air to be supplied to the atomizer nozzle unit is controlled depending on the difference between desired value and actual value and the amount of water to be supplied to the atomizer nozzle unit is varied depending on the set air pressure.

The present invention also provides apparatus for humidifying the air, particularly of industrial areas, having an atomizer nozzle unit comprising a water supply and compressed air supply and having a measuring and control unit whereby the actual moisture content of the air in the area can be determined and compared with a desired moisture content which can be preset (difference between a desired value and the actual value) and if there is a difference between the desired value and the actual value, a valve device associated with the atomizer nozzle unit can be actuated in the opening sense, particularly for carrying out the method according to any one of claims 1 to 4, characterised in that the valve device is constructed in the form of a pressure reducing valve which is associated with a compressed-air supply connecting line of the atomizer nozzle unit and is adjustable depending on the difference between desired value and actual value, the water supply connecting line of the atomizer nozzle unit can be connected to a water tank which is substantially at atmospheric pressure, and the outlet at the atomizer nozzle side of the compressed air supply line is arranged in front of the water outlet at the atomizer nozzle side in the outlet flow direction.

With the method and the apparatus according to the invention, depending on the instantaneous moisture content of the inside air resulting even during an air humidifying operation, the pressure of the compressed air to be supplied can be appropriately continuously readjusted and therefore reduced to such an extent that when the desired moisture content of the inside air is reached, it almost reaches atmospheric pressure and consequently no more compressed air emerges from the nozzle directly the desired moisture content is reached. Since the amount of water to be supplied can likewise be adapted continuously via the compressed air, no more water emerges from the nozzle when the desired moisture content is reached so that dripping is ruled out. Altogether, this can be achieved with structurally very simple means. Moreover, the whole arrangement can be made extremely simple in comparison with the known apparatuses. Valve arrangements in the water connection supply line can be dispensed with completely since the amount of water to be supplied is drawn in by the compressed air to be supplied to the atomizer nozzle unit or the atomizer nozzles. The water can be taken from a water tank at atmospheric pressure. At the same time, the water requirement can be effectively reduced in comparison with known apparatuses, with the same humidifying result. The method and the apparatus according to the invention are virtually accompanied by considerable advantages from the acoustic point of view. Furring and problems due thereto can be effectively avoided.

Further details and advantages of the invention can be seen from the following description and the drawings.

In the drawings:

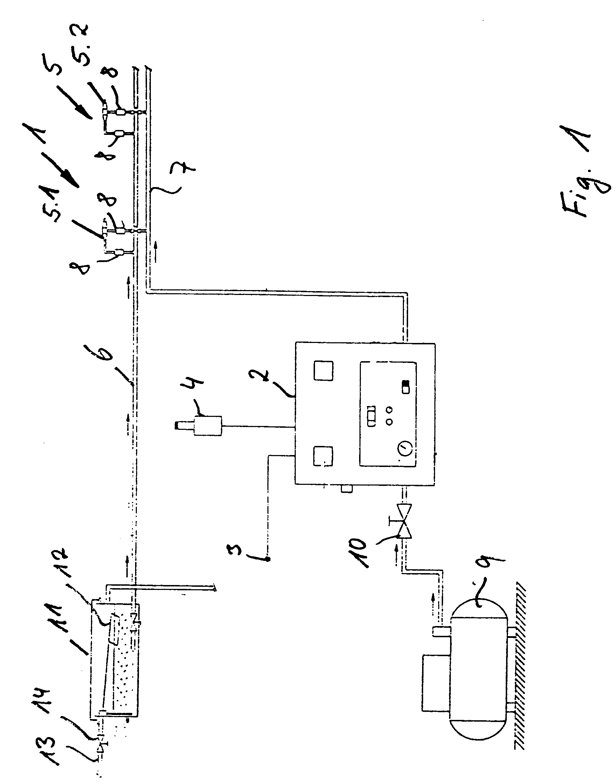

Figure 1 shows a diagrammatic illustration of one example of embodiment of an apparatus according to the invention;

Figure 2 shows a cross-sectional illustration of one example of an embodiment of an atomizer nozzle for an apparatus according to the invention;

Figure 3 shows a side view of a water nozzle insert of the atomizer nozzle according to Figure 2; and

Figure 4 shows a plan view on the lines IV-IV in Figure 3.

An embodiment of apparatus for humidifying the inside air, numbered in general by 1, is illustrated in the drawings and comprises a measuring and control unit which is numbered 2 and can be connected to an electrical voltage supply at 3. The measuring and control unit 2 is connected to a hygrometer 4 to determine the moisture content of the inside air. The measuring and control unit 2 is constructed in such a manner that a desired moisture content of the inside air can be variably adjusted for each individual case in a suitable and known manner via keyboards and display panels. The actual moisture content of the inside air which has been detected has to be compared with this desired moisture content of the inside air. A control signal is delivered depending on the difference between desired value and actual value.

In relatively high regions of inside air, the atomizer nozzle unit 5 may appropriately be provided with a plurality of atomizer nozzles 5.1 and 5.2 disposed one behind the other. These atomizer nozzles 5.1 and 5.2 are connected first to a water connection supply line 6 and a compressed-air supply connection line 7. Filter elements 8 are provided in each of their connecting branch lines. The compressed-air supply line 7 opens at a compressor 9 and comprises a valve device 10 constructed in the form of a pressure reducing valve. This pressure reducing valve is controlled by the measuring and control unit 2 and is actuated in such a manner that it can be opened and closed depending on the difference found between the desired value and the actual value but, in addition, the reducing cross-section of the reduced valve is adapted continuously to the difference between the desired value and the actual value, depending on the instantaneous difference between desired value and actual value. Thus the pressure in the compressed-air line to the atomizer nozzles 5.1, 5.2 can be adjusted depending on the difference between desired value and actual value.

The water connection supply line 6 opens in a water tank 11 which is at atmospheric pressure. Disposed inside the water tank 11 is a float 12 which actuates an inlet pipe 13 with a valve 14 in such a manner that when water is drawn off, the tank is refilled.

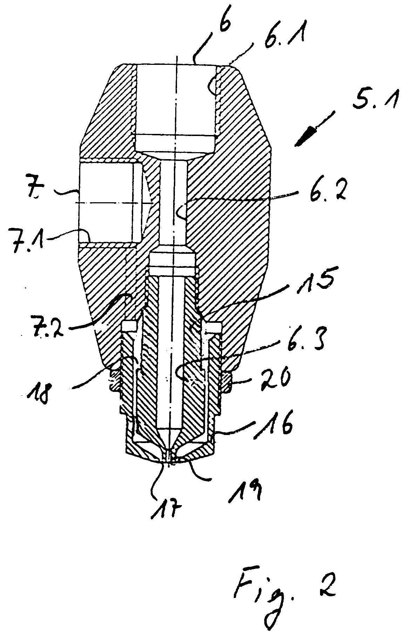

As can be seen in particular from the graphic illustration in Figure 2, the atomizer nozzle 5.1 has a water connection bore 6.1 and a compressed-air connection bore 7.1. The water connection bore 6.1 is followed by a central bore 6.2 which leads into a water duct 6.3 of a water nozzle insert 15. This water nozzle insert 15 can be screwed into the atomizer nozzle 5.1. A closing cap member 16 which surrounds the water nozzle insert 15 at the top and has a central flow passage 17 can likewise be screwed into the atomizer nozzle 5.1. In the assembled state, the closing cap member 16 surrounds the water nozzle insert 15 in such a manner that a free annular space 18 is formed towards the flow passage. Two compressed-air connection bores 7.2 at the atomizer nozzle side which are arranged parallel and are in flow communication with the compressed-air connection bore 7.1 open into this annular space.

The water nozzle insert 15 has a water outlet head 19 at its end adjacent to the flow passage 17 of the closing cap member 16. In its external dimensions, this water outlet head 19 has a slightly smaller diameter than the flow passage 17 so that it can be pushed through the flow passage 17. The closing cap member 16 can be located in various positions via a lock-nut 20 which can be screwed on and which is brought to bear against the atomizer nozzle 5.1 at its end face, namely in such a manner that - as in the example of embodiment illustrated in Figure 2 - the end of the water outlet head 19 terminates plane parallel with the flow passage 17 of the closing cap member 16. By turning the lock nut 20, however, the closing cap member 16 can also be screwed deeper into the corresponding bore in the atomizer nozzle 5.1 so that the water outlet head 19 projects out of the flow passage 17. After appropriate unscrewing of the closing cap member 16, the lock nut 20 can likewise be brought into such a position that there is a distance between the position of the flow passage 17 and that of the outlet end of the water outlet head. Thus the amount of water drawn out of the water tank 11 kept at atmospheric pressure by the compressed air flowing past can be influenced directly in that sometimes more and sometimes less water can be taken from the water tank with the same compressed air present or the same velocity of flow of the compressed air. Between the water tank and the connections to the atomizer nozzles 5.1, 5.2 the water connection line is made free of valves.

If there is a difference between desired value and actual value, the reducing valve 10 is actuated in the opening sense via the measuring and control unit so that the compressed air is supplied at a specific pressure to the atomizer nozzles 5.1 and 5.2. In the course of this, the compressed air flows along the outlet region of the water outlet head and draws the water out of the water tank 11 via the lines 6.2, 6.1 and 6. As the difference between desired value and actual value decreases, the pressure in the compressed-air connection line 7 is continuously reduced after corresponding control of the reducing valve 10 so that after the desired moisture content of the inside air is reached, the velocity of flow of the emerging compressed air drops to zero and so no more water is drawn out of the water tank. As a result, dripping from atomizer nozzles is effectively avoided when the moisture content of the inside air aimed at is reached.

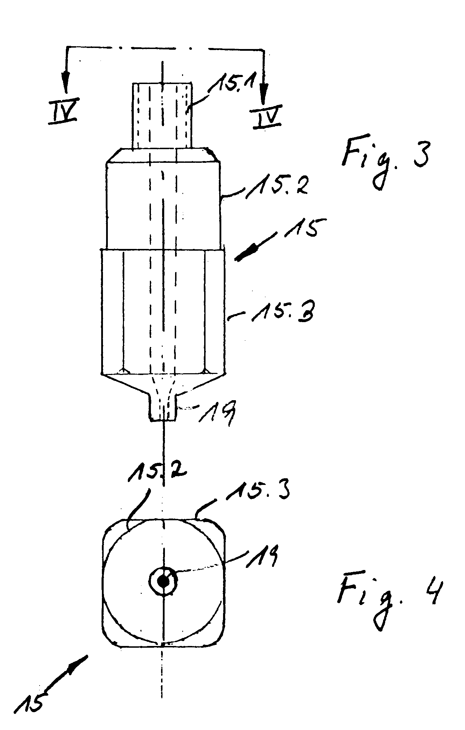

As can be seen from the illustrations in Figure 3 and Figure 4, the water nozzle insert 15 has a screw-in region 15.1, a region 15.2 which is round in cross-section and which has such external dimensions that the compressed air to be supplied from the connecting lines 8.2 can escape freely into the flow space 18. This region 15.2 with a round cross-section is followed by a region 15.3 which can be gripped by a tool and which substantially has a rounded square shape as can be seen from the cross-sectional illustration according to Figure 4.

## Claims

1. A method of humidifying the air, wherein the actual moisture content of the air in the area is determined continuously or cyclically by a measuring and control unit (2) and compared with a desired moisture content of the air in the area, which can be preset, and if there is a difference between desired value and actual value, a water supply line and a compressed air supply line (6, 7) of an atomizer nozzle unit (5) can be actuated in the opening sense, characterised in that the pressure of the compressed air to be supplied to the atomizer nozzle unit (5) is controlled depending on the difference between desired value and actual value and the amount of water to be supplied to the atomizer nozzle unit (5) is varied depending on the set air pressure.

2. A method according to claim 1, characterised in that when the difference between the desired value and the actual value is becoming smaller, the pressure of the compressed air to be supplied to the atomizer nozzle unit (5) can be continuously reduced.

3. A method according to claim 1 or 2, characterised in that the water to be supplied to the atomizer nozzle unit (5) is drawn in by the compressed air supplied to the atomizer nozzle unit (5).

4. A method according to any one of claims 1 to 3, characterised in that the water to be supplied to the atomizer nozzle unit (5) can be taken from a water tank (11) which is at atmospheric pressure.

5. Apparatus for humidifying the air, particularly of industrial areas, having an atomizer nozzle unit (5) comprising a water supply and compressed air supply (6, 7), and having a measuring and control unit (2) whereby the actual moisture content of the air in the area can be determined and compared with a desired moisture content which can be preset (difference between a desired value and the actual value) and if there is a difference between the desired value and the actual value, a valve device (10) associated with the atomizer nozzle unit (5) can be actuated in the opening sense, particularly for carrying out the method according to any one of claims 1 to 4, characterised in that the valve device (10) is constructed in the form of a pressure reducing valve which is associated with a compressed-air supply connecting line (7) of the atomizer nozzle unit (5) and is adjustable depending on the difference between desired value and actual value, the water supply connecting line (6) of the atomizer nozzle unit can be connected to a water tank (11) which is substanitally at atmospheric pressure, and the outlet (19) at the atomizer nozzle side of the compressed air supply line (7, 8, 7.1, 7.2, 19) is arranged in front of the water outlet at the atomizer nozzle side in the outlet flow direction.

6. An apparatus according to claim 5, characterised in that the water connection supply line (6) of the atomizer nozzle unit (5) is made free of valves.

7. An apparatus according to claim 6 or 7, characterised in that the atomizer nozzle unit (5) comprises one or more atomizer nozzles (5.1, 5.2) each with a water nozzle insert (15) associated with the water connection supply line (6, 6.1) and with a closing cap member (16) which has a flow passage (17) and surrounds the water nozzle insert (15) forming an airflow space (18) associated with the compressed-air connection supply line (7, 7.1, 7.2).

8. An apparatus according to claim 7, characterised in that the water outlet of the water nozzle insert (15) is formed by a water outlet head (19) which can be pushed through the flow passage (17) of the closing cap member (16).

9.   An apparatus according to claim 8, characterised in that the distance between the position of the flow passage (17) of the closing cap member (26) and that of the outlet end of the water outlet head (19) of the water nozzle insert (15) is variable.

10.   An apparatus according to any one of claims 7 to 9, characterised in that the water nozzle insert (15) can be screwed into an atomizer nozzle head and has a region (15.2) which can be gripped by a tool and which follows on the water outlet head (19) and is substantially square in cross-section, and a region (15.2) with a reduced cross-section following thereon towards the end which is screwed in (15.1).

11.   An apparatus according to any one of claims 7 to 10, characterised in that compressed-air connecting lines (7.2) which can be connected to the compressed-air connection supply line (7, 7.1) are formed, extending parallel, in the atomizer nozzle (5.1, 5.2).

12.   An apparatus according to any one of claims 7 to 11, characterised in that the closing cap member (16) can be screwed into the atomizer nozzle (5.1, 5.2) and the depth of screwing-in can be limited by a lock-nut (20).

Fig. 1

Fig. 2

Fig. 3

Fig. 4

**European Patent Office**

# EUROPEAN SEARCH REPORT

Application Number

EP 91 30 6676

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 979 266 (BAILEY)<br>* Column 3, line 40 - column 5, line 37; figures 1,3 * | 1-5 | F 24 F    6/14<br>B 05 B   12/12 |
| A | | 6 | |
| | --- | | |
| A | CH-A- 131 979 (SULZER)<br>* Page 1, column 1, paragraph 2 - column 2, paragraph 1; figure 1 * | 7-10,12 | |
| | --- | | |
| A | US-A-3 194 498 (MINER)<br>* Figures 3,4 * | 11 | |
| | ----- | | |
| | | | TECHNICAL FIELDS SEARCHED (Int. Cl.5) |
| | | | F 24 F<br>B 05 B |

The present search report has been drawn up for all claims

| Place of search | Date of completion of the search | Examiner |
|---|---|---|
| THE HAGUE | 31-10-1991 | PESCHEL G. |